# FASCICULE DE BREVET EUROPEEN

(11) **EP 3 212 898 B1**
(45) Date de publication et mention de la délivrance du brevet: **12.12.2018**
(21) Numéro de dépôt: 15785167.6
(22) Date de dépôt: 13.10.2015
(51) Int. Cl.: F01D 25/18, F02C 7/06, F16N 31/00, F16H 57/04

(54) **CAPOT DE RÉCUPÉRATION D'HUILE DE LUBRIFICATION POUR UN ÉQUIPEMENT DE TURBOMACHINE**
SCHMIERÖLSAMMELKAPPE FÜR TURBOMASCHINENAUSRÜSTUNGEN
LUBRICATING-OIL COLLECTION CAP FOR TURBOMACHINE EQUIPMENT

(30) Priorité: 28.10.2014 FR 1460353
(43) Date de publication de la demande: 06.09.2017
(73) Titulaire: Safran Aircraft Engines, 75015 Paris (FR)
(72) Inventeur: PIKOVSKY, Catherine, F-77550 Moissy-Cramayel (FR); FARVACQUE, Benoit, Guillaume, F-77550 Moissy-Cramayel (FR); MORREALE, Serge, René, F-77550 Moissy-Cramayel (FR); TROHEL, Mathieu, Jean, Pierre, F-77550 Moissy-Cramayel (FR)
(74) Mandataire: Gevers & Orès
(86) Numéro de dépôt international: PCT/FR2015/052757
(87) Numéro de publication internationale: WO 2016/066919

(56) Documents cités:
- EP-A1- 1 245 793
- EP-A1- 2 672 148
- US-A1- 2010 236 347

## Description

### Domaine de l'invention et état de la technique :

La présente invention se rapporte au domaine de la lubrification des moteurs d'aéronef. Elle vise plus particulièrement un dispositif de récupération de l'huile qui a été utilisée par un équipement comportant une partie tournante.

Par exemple, un turbopropulseur à hélices contrarotatives peut comporter un réducteur planétaire (désigné par l'acronyme anglais PGB pour Power Gear Box) dont le support de satellites tourne à l'intérieur d'une enceinte statique.

Le support de satellites forme un capot autour des roulements et engrenages de la PGB. L'huile injectée en continu dans la PGB lubrifie et refroidit les roulements et les engrenages avant d'être projetée par centrifugation contre le support de satellites. Le support de satellites comporte des orifices par lesquels cette huile peut s'échapper vers l'enceinte statique qui sert d'enceinte de récupération pour renvoyer l'huile dans le circuit de lubrification.

La PGB nécessite une grande quantité d'huile. Il est important, pour récupérer efficacement l'huile vers les moyens d'évacuation d'huile de l'enceinte et éviter un engorgement, de guider les jets s'échappant des orifices du support de satellites de manière à ce que l'huile projetée contre la paroi de l'enceinte forme un anneau animé d'un mouvement rotatif d'ensemble. Plus cet anneau est stable, moins il y a d'éclaboussures, et meilleure est la récupération de l'huile dans l'enceinte.

Les orifices de passage d'huile dans le support de satellites sont généralement surdimensionnés pour éviter un risque d'accumulation d'huile dans la partie tournante. Ce faisant, la section de ces orifices ne correspond pas à la section du jet d'huile qui les traverse. Il est alors difficile de prévoir la composante radiale du jet sortant des orifices et donc de maîtriser sa direction. Dans ces conditions, la mise au point d'un système efficace de récupération d'huile dans l'enceinte statique est problématique, au moins dans le cas de réducteurs nécessitant un grand débit de lubrification. Les documents US 2010/0236347 et EP 2672148 représentent l'état de la technique antérieure pertinent.

La présente invention a pour but de proposer une solution simple pour récupérer efficacement le débit d'huile sortant d'un équipement, en particulier un équipement en rotation dans une enceinte de lubrification.

### Exposé de l'invention :

A cet effet, l'invention concerne un capot annulaire de récupération d'huile de lubrification pour un équipement de turbomachine, ledit capot étant configuré pour s'étendre autour dudit équipement et tourner autour d'un axe, capot comportant des orifices traversants de passage radial d'huile par centrifugation, caractérisé en ce qu'il comporte des moyens de déviation de l'huile à une sortie desdits orifices, agencés pour lui donner une vitesse d'échappement orientée dans une dans une direction sensiblement transversale à l'axe et sensiblement tangentielle, c'est-à-dire perpendiculaire à la direction radiale, au niveau de ladite sortie.

Dans le présent document, les termes radial et transversal font référence à l'axe autour duquel tourne le capot. De même, les termes avant et arrière sont pris en référence au mouvement d'un point du capot suivant le sens de rotation.

La sortie desdits orifices traversants débouche sur la paroi radialement externe du capot. En déviant tangentiellement le jet d'huile en sortie des orifices du capot tournant, la composante radiale du jet, mal maîtrisée disparaît. De plus, la vitesse du jet s'ajoute à la vitesse périphérique en sortie de l'orifice traversant. Les jets d'huile sortant du capot ont donc une orientation mieux maîtrisée. De plus, l'impulsion tangentielle de l'huile projetée sur la paroi interne de l'enceinte est plus forte. Les conditions sont donc réunies pour améliorer la mise en rotation d'ensemble de cette huile contre la paroi de l'enceinte et limiter les éclaboussures.

Avantageusement, les moyens de déviation sont agencés pour former un écran dans la direction radiale au niveau de ladite sortie.

Avantageusement, les moyens de déviation sont agencés pour former en sortie de chaque orifice un coude comportant un conduit d'échappement de l'huile orienté dans ladite direction tangentielle.

De préférence, les moyens de déviation pour chaque orifice comportent un capuchon placé en sortie dudit orifice.

De préférence, ledit capuchon comporte une partie écartée de la paroi externe du capot qui s'étend de manière sensiblement tangentielle vers l'avant dudit orifice en suivant le sens de rotation du capot.

Avantageusement, l'extension radiale dudit capuchon est inférieure à son extension tangentielle.

Ainsi, les moyens de déviation peuvent être réalisés simplement et avec un encombrement faible. La paroi de l'enceinte de récupération peut être proche du capot tournant.

De préférence, lesdits orifices sont répartis dans un plan transversal correspondant à une section de diamètre maximum du capot.

Cela permet d'assurer un bon guidage par centrifugation de l'huile à l'intérieur du capot pour l'évacuer.

Avantageusement, lesdits orifices forment des petites conduites d'orientation sensiblement radiale dans une épaisseur de paroi dudit capot. L'orientation radiale est utile pour récupérer l'huile par centrifugation. De plus, Le maintien de cette orientation sur l'extension de la conduite rend la réalisation aisée par des moyens d'usinage. De préférence, les orifices traversants sont ménagés dans une zone d'épaisseur maximale de la paroi du capot. Cela permet d'allonger les petites conduites et de mieux entraîner l'huile passant par ces conduites.

Le capot peut être entouré par un cerclage qui recouvre l'ensemble desdits orifices, et les moyens de déviation d'huile peuvent être formés par des poches ouvertes dans ledit cerclage, obtenues, par exemple, par emboutissage.

Le capot peut comporter deux coques annulaires assemblées par des brides annulaires dans un plan transversal, lesdites brides étant agencées pour définir entre elles lesdits orifices traversants

Avantageusement, les brides définissent deux gorges annulaires en vis-à-vis et agencées pour tenir ledit cerclage. Cela mutualise les moyens d'assemblage du capot et de fixation des moyens de déviation sur le capot.

L'invention concerne aussi un ensemble comprenant un équipement de turbomachine et un capot tel que décrit précédemment, ledit équipement étant par exemple un réducteur, ainsi qu'une turbomachine comportant un tel capot, et/ou un tel ensemble.

### Brève description des figures :

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :
- la figure 1 présente schématiquement un module de turbomachine selon l'art antérieur comportant un équipement tournant, un capot annulaire et un carter annulaire, ici en coupe selon un demi-plan passant par l'axe de rotation de l'équipement ;
- la figure 2 présente une coupe transversale schématique suivant le plan P du capot et du carter annulaire du module de la figure 1, selon l'état de l'art ;
- la figure 3 présente une coupe transversale schématique suivant le plan P du capot et du carter annulaire du module de la figure 1, modifiés selon l'invention ;
- la figure 4 est un agrandissement de la partie B de la figure 2 pour un module selon l'état de l'art ;
- la figure 5 est un agrandissement de la partie B' de la figure 3 pour un module modifié selon l'invention ;
- la figure 6 représente, en coupe suivant un plan méridien, une bride d'assemblage d'un capot annulaire selon l'invention ;
- la figure 7 représente une coupe schématique suivant le plan P de la figure 6, au niveau de l'élément 19.

### Description d'un mode de réalisation :

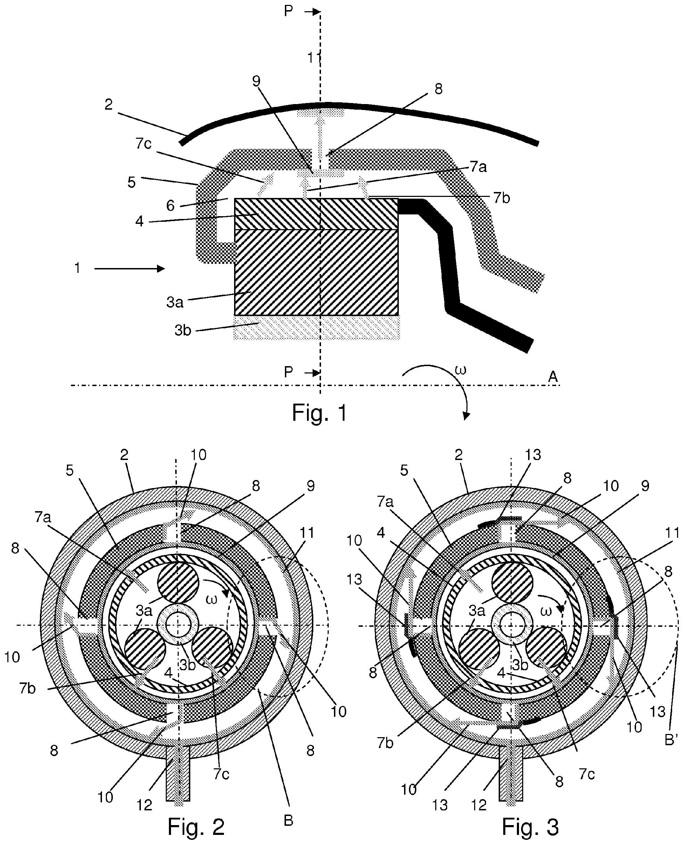

La figure 1 représente un équipement 1 de turbomachine, qui est monté dans une enceinte 2 et mobile en rotation autour d'un axe A. Généralement les parois de l'enceinte 2 sont formées par au moins un carter annulaire 2 s'étendant autour de l'équipement 1.

Cet équipement 1 est par exemple un réducteur de type PGB. Une arrivée d'huile, non représentée sur la figure, apporte de l'huile dans la région centrale de la PGB pour la lubrifier. Cette huile traverse par entraînement centrifuge diverses parties actives de la PGB, telles que des engrenages. Ces parties sont schématiquement représentées sur la figure par des parties actives internes 3a et 3b tournant dans un sens, et entourées par une partie externe 4, contrarotative ou fixe selon le cas.

Sur cet exemple, dans le cas d'une PGB avec un train d'engrenages épicycloïdal, la partie la plus interne 3b représente un arbre d'entrée planétaire sous la forme d'un pignon moteur, qui est monté par une liaison par cannelures sur l'arbre de turbine tournant dans un sens de rotation en entraînant la PGB. La partie 3a représente un porte-satellites supportant des satellites, par exemple au nombre de trois, qui s'engrènent autour de l'arbre d'entrée 3b. La partie externe 4 représente une couronne externe qui s'engrène dans les satellites. Les rapports de dimensions entre les différents éléments sont agencés, ici, pour que la couronne externe 4 tourne en sens inverse de l'arbre d'entrée 3b, les satellites tournants par rapport au porte-satellites 3a et l'entraînant, ici, en rotation dans le même sens que l'arbre d'entrée 3b mais avec une vitesse différente. Cette description succincte illustre le fait que, dans un tel dispositif, de nombreuses pièces sont en contact avec des mouvements relatifs et des efforts importants, ce qui nécessite une forte quantité d'huile pour la lubrification et le refroidissement.

L'ensemble de la PGB est confiné dans un capot annulaire externe 5 tournant. Ce capot 5 est ici solidaire de la partie interne 3a et tourne donc dans le sens contraire à la partie externe 4 de la PGB 1 avec une vitesse donnée ω. Le capot 5 s'étend autour et à distance de la partie active 4 pour former une cavité interne 6 qui sert, entre autre, à la réception de l'huile de lubrification sortant de la PGB 1 par centrifugation.

L'huile ayant lubrifié et refroidi les parties actives 3a, 3b et 4 de la PGB 1 peut en sortir par différents chemins 7a, 7b, 7c. Le capot externe 5 est conformé pour guider l'huile provenant de ces différents chemins vers des orifices de sortie 8. Ces orifices 8 sont avantageusement localisés dans une zone de rayon maximal du capot 5 pour favoriser l'évacuation de l'huile par centrifugation. De plus, ils sont en général plusieurs et, de préférence, uniformément répartis en circonférence dans un plan P perpendiculaire à l'axe de rotation A.

Comme c'est montré sur la figure 2, cette huile a tendance, sous l'effet de la force centrifuge, à former un film annulaire 9 entrainé par le capot 5, tournant sur la figure à la vitesse ω, dans le sens des aiguilles d'une montre.

Avantageusement, les orifices 8 sont formés dans une zone du capot 5 relativement épaisse. Ils forment ainsi de petites conduites 8, dont l'orientation est sensiblement radiale par rapport à l'axe de rotation A. L'huile s'échappant par centrifugation au travers de ces petites conduites 8 est donc entraînée en rotation par les parois de ces petites conduites 8 et elle est projetée vers la paroi interne du carter 2, suivant des jets 10, dans une direction résultant d'une composante radiale et tangentielle. Cela contribue à la formation d'un autre film annulaire d'huile 11 contre la paroi statique du carter 2. Pour que l'huile ne ruisselle pas, il est intéressant que ce film annulaire 11 d'huile ait un mouvement d'ensemble circulaire imprimé par les jets 10. Ainsi, l'huile restant plaquée contre la paroi interne du carter 2 peut être récupérée, par exemple, par une canalisation 12 débouchant en un point bas du carter 2.

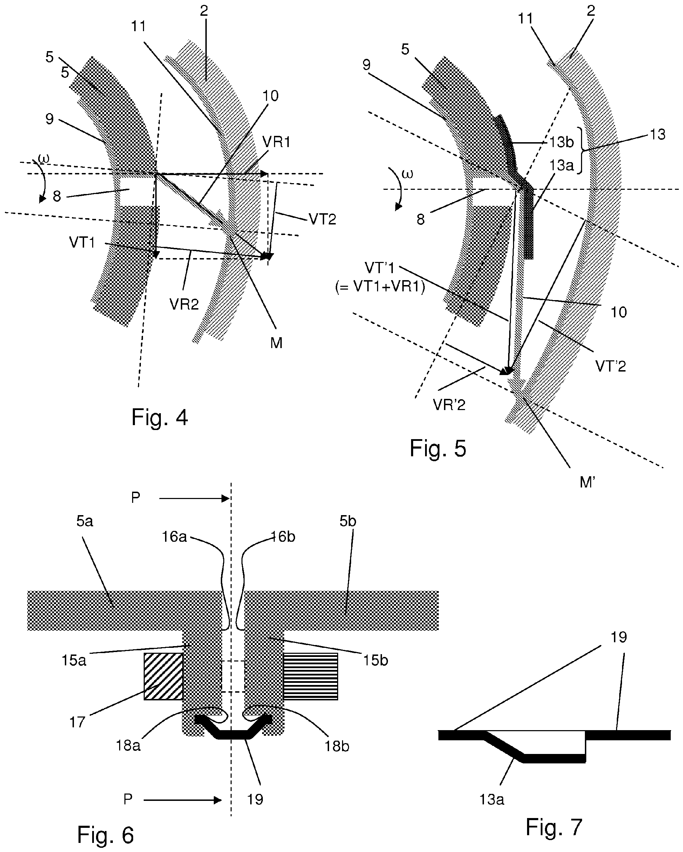

En référence à la figure 4, le jet 10 s'échappe de la petite conduite 8 avec une vitesse tangentielle VT1, perpendiculaire à la direction radiale et correspondant à la vitesse tangentielle de la paroi du capot 5 en sortie, parce qu'il est entraîné par la partie arrière, par rapport au mouvement de rotation ω, de la paroi de la petite conduite 8. Par ailleurs, le jet 10 a une composante radiale VR1, sensiblement égale au débit d'huile passant par la petite conduite 8 divisé par la section du jet 10.

Le jet 10 rencontre la paroi interne du carter 2 en un point M, légèrement en avant de la sortie de la petite conduite 8. Au point d'impact M, la valeur de la composante tangentielle VT2 sur la paroi du carter 2, perpendiculaire à la direction radiale au point d'impact M, est légèrement inférieure à celle de la vitesse tangentielle VT1 par rapport au capot 5 en sortie de la petite conduite 8, et la composante radiale VR2 sur le carter 2 est légèrement supérieure à celle de la vitesse radiale VR1 de sortie sur le capot 5.

La composante radiale VR2 de la vitesse du jet 10 au point d'impact M ne participe pas à l'entraînement en rotation du film annulaire 11. De plus, elle risque d'entraîner des éclaboussures lorsque le jet 10 percute la paroi du carter 2 et, ainsi, de disperser l'huile dans l'enceinte ou sur le capot 5. Par ailleurs, comme il a été dit précédemment, la section des petites conduites 8 est nettement plus grande que la section du jet d'huile s'échappant généralement par ces petites conduites 8, afin d'éviter le risque de rétention d'huile à l'intérieur du capot 5. La vitesse radiale VR1 du jet 10, qui constitue la plus grande partie de la vitesse radiale VR2 au point d'impact, est donc mal connue.

Selon l'invention, en référence aux figures 3 et 5, un dispositif 13 de déviation du jet 10 est placé en sortie de chaque petite conduite 8. Selon un mode de réalisation schématiquement représenté sur la figure 5, le moyen de déviation 13 peut comporter essentiellement un capuchon 13a placé en regard de la sortie de la petite conduite 8, dont une partie est sensiblement parallèle à la tangente au capot 5 au niveau ladite sortie. Par ailleurs, une partie arrière du capuchon 13a, suivant le sens de rotation du capot 5, contraint l'huile à s'écouler vers l'avant, en rejoignant la paroi externe du capot 5 près du bord arrière de l'ouverture de sortie de la petite conduite 8. Ce capuchon 13a forme un écran devant l'ouverture de la petite conduite 8 dans la direction radiale et se prolonge vers l'avant en formant, avec la paroi externe du capot 5, un conduit tangentiel s'étendant vers l'avant, suivant le sens de rotation du capot 5. La distance radiale du capuchon 13a au capot 5 reste inférieure à une valeur sensiblement équivalente à un diamètre ou une dimension transversale de la section de sortie de la petite conduite 8.

Par ailleurs, ce moyen de déviation 13 comporte au moins une partie arrière 13b, suivant le sens de rotation du capot 5, qui s'étend de préférence suffisamment le long du capot 5 pour permettre d'adapter un moyen de fixation, tel qu'une vis ou un clipsage.

Un tel moyen de déviation peut être formé par exemple par emboutissage d'une tôle pour former ainsi un capuchon 13a recouvrant l'orifice de sortie de la petite conduite 8 et les attaches 13b.

Comme illustré sur la figure 5, avec ce moyen de déviation 13, le jet 10 sort tangentiellement au capot 5, au niveau de la sortie de la petite conduite 8 par le conduit formé avec le capuchon 13a. De plus, la composante tangentielle VT'1 de sortie du capuchon 13, perpendiculaire à la direction radiale, est augmentée, par rapport à sa valeur initiale VT1, de la vitesse radiale VR1 initiale liée au débit d'huile dans le jet 10. En conséquence, lorsque l'huile arrive au point d'impact M' sur la paroi interne du carter 2, elle a par rapport au cas précédent, une vitesse tangentielle VT'2, perpendiculaire à la direction radiale au point d'impact M, plus importante et une vitesse radiale VR'2 plus faible, que sans le capuchon 13. On gagne ainsi à la fois sur la mise en rotation de l'huile contre la paroi du carter 2 et sur la diminution du risque d'éclaboussures.

Le principe de l'invention a ici été présenté avec une réalisation particulière du moyen 13 de déviation tangentielle du jet 10. L'homme du métier pourra aisément concevoir différents moyens adaptables en sortie d'une petite conduite 8 dans le capot 5 pour prolonger cette dernière par une partie coudée dont l'ouverture est dirigée vers l'avant, suivant le sens de la vitesse de rotation ù du capot 5.

Un mode de réalisation avantageux est présenté, en référence à la figure 6, dans le cas où le capot 5 comporte deux coques annulaires 5a, 5b, s'assemblant dans le sens axial suivant un plan d'assemblage transversal à l'axe A de rotation. De préférence, le plan d'assemblage correspond au plan P transversal où sont localisées les petites conduites 8.

Ici, les coques 5a, 5b sont assemblées par des brides comprenant un anneau 15a transversal en extrémité d'une première coque 5a et un anneau transversal 15b en extrémité de l'autre coque 5b. De manière classique, chaque anneau de bride 15a, 15b s'étend radialement sur une distance supérieure à l'épaisseur des coques, l'un 15a présentant une face transversale 16a coopérant avec une face transversale 16b de l'autre anneau de bride 15b pour fermer l'espace entre les deux anneaux 15a, 15b et les solidariser. Les deux faces 16a, 16b sont pressées l'une contre l'autre par des boulons ou des vis 17. La tenue mécanique des deux coques 5a, 5b, l'une contre l'autre, est assurée par l'extension radiale des anneaux de bride 15a, 15b.

Dans ce mode de réalisation, les faces transversales 16a et 16b des anneaux de bride 15a, 15b sont usinées de manière à laisser entre elles des espaces qui forment les petites conduite 8 radiales, ainsi que le représente la coupe suivant un plan méridien passant par l'une de ces conduites 8, sur la figure 6.

On peut noter ici que, outre le fait que l'interface entre les brides 15a, 15b est un endroit commode pour réaliser les passages d'huile 8 au travers du capot, les brides 15a, 15b forment également une zone d'épaisseur maximale du capot 5, à cause de l'extension radiale des anneaux 15a, 15b. Les petites conduites 8 ont donc une extension radiale plus importante que si elles étaient pratiquées ailleurs, ce qui leur permet d'entraîner plus efficacement l'huile dans le mouvement de rotation du capot 5.

Par ailleurs, dans cette réalisation, chaque anneau de bride 15a, 15b comporte, à son extrémité radiale, une gorge 18a, 18b circonférentielle, orientée axialement et tournée vers l'interface entre les brides 15a, 15b. En correspondance, un cerclage 19 est installé sur la périphérie des anneaux de bride 15a, 15b et est fixé contre eux par l'insertion de ses bords latéraux dans lesdites gorges 18a, 18b. Ce cerclage 19 peut former un moyen d'étanchéité complémentaire face à la jointure entre les deux anneaux de bride 15a, 15b. Avantageusement, le cerclage 19 aura un rayon plus grand dans sa partie centrale, afin que l'huile soit plus concentrée au centre.

Les capuchons 13a des moyens de déviation 13 sont pratiqués sur ce cerclage en face de chaque petite conduite 8 de la bride 15. Ce cerclage comporte donc, de préférence, un indexage angulaire afin d'assurer le positionnement des poches en regard de chaque petite conduite. Leur forme en coupe suivant le plan transversal P, en référence à la figure 7, correspond sur le principe à ce qui a été présenté pour la figure 5.

Le cerclage 19 formant un ruban, lesdits capuchons 13 peuvent, par exemple, facilement être façonnés par emboutissage sur ce ruban avant qu'il ne soit fixé aux brides 15a, 15b.

## Revendications

1. Capot annulaire de récupération d'huile de lubrification pour un équipement de turbomachine, ledit capot (5) étant configuré pour s'étendre autour dudit équipement (1) et tourner autour d'un axe (A), ledit capot (5) comportant des orifices traversants (8) de passage radial d'huile par centrifugation, **caractérisé en ce qu'**il comporte des moyens (13) de déviation de l'huile à une sortie desdits orifices (8), agencés pour lui donner une vitesse d'échappement orientée dans une direction sensiblement transversale à l'axe (A) et sensiblement tangentielle, c'est-à-dire perpendiculaire à la direction radiale, au niveau de ladite sortie.

2. Capot selon la revendication précédente, dans lequel les moyens de déviation (13) sont agencés pour former un écran dans la direction radiale au niveau de ladite sortie.

3. Capot selon la revendication précédente, dans lequel les moyens de déviation (13) sont agencés pour former en sortie de chaque orifice (8) un coude comportant un conduit d'échappement de l'huile orienté dans ladite direction tangentielle.

4. Capot selon la revendication précédente, dans lequel les moyens de déviation (13) pour chaque orifice (8) comportent un capuchon (13a), placé en sortie dudit orifice (8).

5. Capot selon la revendication précédente, dans lequel l'extension radiale dudit capuchon (13a) est inférieure à son extension tangentielle.

6. Capot selon l'une des revendications précédentes, dans lequel lesdits orifices (8) sont répartis dans un plan (P) transversal correspondant à une section de diamètre maximum du capot.

7. Capot selon l'une des revendications précédentes, dans lequel lesdits orifices (8) forment des petites conduites d'orientation sensiblement radiale dans une épaisseur de paroi dudit capot (5).

8. Capot selon la revendication précédente, dans lequel ledit capot est entouré par un cerclage (19) qui recouvre l'ensemble desdits orifices (8), et dans lequel les moyens (13) de déviation d'huile sont formés par des poches ouvertes (13a) dans ledit cerclage (19), obtenues, par exemple, par emboutissage.

9. Capot selon l'une des revendications précédentes, comportant deux coques annulaires (5a, 5b) assemblées par des brides annulaires (15a, 15b) dans un plan transversal (P), lesdites brides (15a, 15b) étant agencées pour définir entre elles lesdits orifices traversants (8).

10. Capot selon la revendication précédente, en dépendance de la revendication 8, dans lequel les brides (15a, 15b) définissent deux gorges annulaires (18a, 18b) en vis-à-vis et agencées pour tenir ledit cerclage (19).

11. Ensemble comprenant un équipement (1) de turbomachine et un capot (5) selon l'une des revendications précédentes, ledit équipement (1) étant par exemple un réducteur.

12. Turbomachine comportant un capot (5) selon l'une des revendications 1 à 10, et/ou un ensemble (5, 1) selon la revendication 11.

## Patentansprüche

1. Ringförmige Schmierölsammelkappe für eine Turbomaschinenausrüstung, wobei die Kappe (5) konfiguriert ist, um sich um die Ausrüstung (1) herum zu erstrecken und um eine Achse (A) zu drehen, wobei die Kappe (5) quer verlaufende Öffnungen (8) für radialen Durchgang von Öl durch Zentrifugation enthält, **dadurch gekennzeichnet, dass** sie Mittel (13) zur Umleitung des Öls zu einem Ausgang der Öffnungen (8) enthält, die angeordnet sind, um ihm eine Ablassgeschwindigkeit zu verleihen, die in eine im Wesentlichen zur Achse (A) quer verlaufenden Richtung und im Wesentlichen tangential ausgerichtet ist, das heißt senkrecht zur radialen Richtung in Höhe des Ausgangs.

2. Kappe nach dem vorstehenden Anspruch, wobei die Mittel zur Umleitung (13) angeordnet sind, um einen Schirm in der radialen Richtung in Höhe des Ausgangs zu bilden.

3. Kappe nach dem vorstehenden Anspruch, wobei die Mittel zur Umleitung (13) angeordnet sind, um am Ausgang jeder Öffnung (8) einen Krümmer zu bilden, der eine Ölablassleitung enthält, die in die tangentiale Richtung ausgerichtet ist.

4. Kappe nach dem vorstehenden Anspruch, wobei die Mittel zur Umleitung (13) für jede Öffnung (8) einen Verschluss (13a) enthalten, der am Ausgang der Öffnung (8) platziert ist.

5. Kappe nach dem vorstehenden Anspruch, wobei die radiale Erstreckung des Verschlusses (13a) kleiner als seine tangentiale Erstreckung ist.

6. Kappe nach einem der vorstehenden Ansprüche, wobei die Öffnungen (8) auf einer quer verlaufenden Ebene (P) verteilt sind, die einem Abschnitt eines maximalen Durchmessers der Kappe entspricht.

7. Kappe nach einem der vorstehenden Ansprüche, wobei die Öffnungen (8) kleine Leitungen mit einer im Wesentlichen radialen Ausrichtung in einer Wanddicke der Kappe (5) bilden.

8. Kappe nach dem vorstehenden Anspruch, wobei die Kappe von einer Umreifung (19) umgeben ist, die die Gesamtheit der Öffnungen (8) abdeckt und in der die Mittel (13) zur Umleitung von Öl durch offene Fächer (13a) in der Umreifung (19) gebildet sind, die beispielsweise durch Tiefziehen erhalten werden.

9. Kappe nach einem der vorstehenden Ansprüche, die zwei ringförmige Schalen (5a, 5b) enthält, die durch ringförmige Flansche (15a, 15b) in einer quer verlaufenden Ebene (P) zusammengefügt sind, wobei die Flansche (15a, 15b) angeordnet sind, um unter sich die quer verlaufenden Öffnungen (8) zu definieren.

10. Kappe nach dem vorstehenden Anspruch, in Abhängigkeit von Anspruch 8, wobei die Flansche (15a, 15b) zwei einander gegenüberliegende ringförmige Aussparungen (18a, 18b) definieren, und die angeordnet sind, um die Umreifung (19) zu halten.

11. Anordnung, umfassend eine Turbomaschinenausrüstung (1) und eine Kappe (5) nach einem der vorstehenden Ansprüche, wobei die Ausrüstung (1) beispielsweise ein Getriebe ist.

12. Turbomaschine, die eine Kappe (5) nach einem der Ansprüche 1 bis 10 und/oder eine Anordnung (5, 1) nach Anspruch 11 enthält.

## Claims

1. An annular cap for collecting lubricating oil for turbomachine equipment, said cap (5) being configured to extend around said equipment (1) and to rotate around an axis (A), said cap (5) including through orifices (8) through which the oil can pass radially under the effect of spinning, **characterized in that** it includes means (13) for deflecting the oil leaving said orifices (8), arranged to give it an exit speed oriented in a direction substantially transverse to the axis (A) and substantially tangential, i.e., perpendicular, to the radial direction, at said outlet.

2. The cap according to the preceding claim, wherein the deflecting means (13) are arranged to form a screen in the radial direction at said outlet.

3. The cap according to the preceding claim, wherein the deflecting means (13) are arranged to form a bend at the outlet of each orifice (8), including a discharge conduit of the oil oriented in said tangential direction.

4. The cap according to the preceding claim, wherein the deflecting means (13) for each orifice (8) include a cover (13a) placed at the outlet of said orifice (8).

5. The cap according to the preceding claim, wherein the radial extension of said cover (13a) is smaller than its tangential extension.

6. The cap according to one of the preceding claims, wherein said orifices (8) are distributed in a transverse plane (P) corresponding to a section of the cap of maximum diameter.

7. The cap according to one of the preceding claims, wherein said orifices (8) form small, substantially radial orientation lines in a wall thickness of said cap (5).

8. The cap according to the preceding claim, wherein said cap is surrounded by a band (19) that covers all of said orifices (8), and wherein the oil deflecting means (13) can be formed by open pockets (13a) in said band (19), for example obtained by stamping.

9. The cap according to one of the preceding claims, including two annular shells (5a, 5b) assembled by annular flanges (15a, 15b) in a transverse plane (P), said flanges (15a, 15b) being arranged to define said through orifices (8) between them.

10. The cap according to the preceding claim, depending on claim 8, wherein the flanges (15a, 15b) define two annular grooves (18a, 18b) facing one another and arranged to hold said band (19).

11. An assembly comprising a turbomachine equipment (1) and a cap (5) according to one of the preceding claims, said equipment (1) for example being a reduction gear.

12. A turbomachine including a cap (5) according to one of claims 1 to 10, and/or an assembly (5, 1) according to claim 11.
